(19) Europäisches Patentamt
European Patent Office
Office européen des brevets

(11) Publication number: **0 004 273**
**A1**

# (12) EUROPEAN PATENT APPLICATION

(21) Application number: 79100235.5

(22) Date of filing: 29.01.79

(51) Int. Cl.2: C 08 G 65/30

(30) Priority: 16.03.78 US 887333
12.12.78 US 967082

(43) Date of publication of application: 03.10.79
Bulletin 79/20

(84) Designated Contracting States: DE FR GB IT NL

(71) Applicant: E.I. DU PONT DE NEMOURS AND COMPANY, Legal Department 1007 Market Street, Wilmington Delaware 19898 (US)

(72) Inventor: Robinson, Ivan Maxwell, 1805 Shipley Road, Wilmington Delaware 19803 (US)

(74) Representative: Abitz, Walter, Dr.-Ing. et al, Abitz, Morf, Gritschneder P.O.Box 860109, D-8000 München 86 (DE)

(54) **Copolyether glycols of tetrahydrofuran and alkylene oxides having low oligomeric cyclic ether content and method for preparing the same.**

(57) Tetrahydrofuran/alkylene oxide polymerizates containing no more than 3%, by weight, of oligomeric cyclic ethers are prepared by extracting the ethers from a raw polymerizate with water.

EP 0 004 273 A1

CH 1007 A

TITLE

# Copolyether Glycols of Tetrahydrofuran And Alkylene Oxides Having Low Oligomeric Cyclic Ether Content And Method for Preparing the Same

## Technical Field

This invention relates to tetrahydrofuran (THF)/alkylene oxide polymerizates. It is more particularly directed to such polymerizates containing no more than about 3%, by weight, of oligomeric cyclic ethers. It is further directed to a method for producing such polymerizates, according to which oligomeric cyclic ethers are extracted from a THF/alkylene oxide polymerizate with water.

## Background Art

Copolyether glycols based on THF and alkylene oxides are known and have been used in the preparation of polyurethanes. Processes disclosed in the art for producing these copolyether glycols, such as that shown in British Patent 854,958, also produce oligomeric cyclic ether byproducts, which may constitute as much as 7-15%, by weight of the polymerizate. The presence of these oligomeric cyclic ethers in the polymerizate can be undesirable for several reasons. First, the ethers are nonfunctional impurities and

can represent an economic penalty to a purchaser of the polymerizate because up to 7-15%, by weight, of the material purchased contains no reactive hydroxyl groups and may therefore be useless for his purposes. Secondly, use of the polymerizate in the preparation of a polyurethane tends to degrade the polyurethane's properties in much the same way as an excess of plasticizer in the polyurethane does. The lower molecular weight oligomeric cyclic ethers vaporize slowly at elevated temperatures and are quite soluble in common organic liquids; the total effect of these physical properties on a polyurethane product is weight loss on exposure to high temperatures or organic solvents, frequently accompanied by undesirable dimensional changes.

The aforementioned British patent discloses, in Examples 1 and 2, that "unreacted monomers and secondary products of low molecular weight which occur to a small degree" can be removed from the polymerizate by distillation *in vacuo* at temperatures up to 180°C. It has been found, however, that the oligomeric cyclic ether content of the polymerizate cannot be reduced below about 5%, by weight, with such a procedure. At that concentration, the oligomeric cyclic ethers still detract from the polymerizate's usefulness.

The need therefore exists for a THF/alkylene oxide polymerizate containing a minimum of oligomeric cyclic ethers. This need is filled by the present invention, which provides a THF/alkylene oxide polymerizate containing no more than about 3%, by weight, of oligomeric cyclic ethers, and in a preferred embodiment, provides a polymerizate containing no more than about 2%. In a highly preferred embodiment of the invention, the polymerizate contains no detectable cyclic ethers.

Disclosure of the Invention

The raw THF/alkylene oxide polymerizates from which the polymerizates of the invention are prepared can be any of those produced by known methods of preparing copolyether glycols based on THF and alkylene oxides. Illustrative of such methods are those shown in British Patent 854,958 and in U.S. Patent 4,127,513. The disclosures of those documents are incorporated into this application by reference to show how such polymerizates are prepared.

"Alkylene oxide", as used herein means an alkylene oxide whose ring contains up to 3 carbon atoms. The alkylene oxide can be unsubstituted or substituted with, for example, alkyl groups or halogen atoms. Illustrative are ethylene oxide, 1,2-propylene oxide, 1,3-propylene oxide, 1,2-butylene oxide, 1,3-butylene oxide, 2,2-bischloromethyl-1,3-propylene oxide and epichlorohydrin. The preferred polymerizates of the invention are those of THF and ethylene oxide and THF and 1,2-propylene oxide.

The oligomeric cyclic ether content of the raw polymerizates do not appear to be closely related to the molecular weights and THF/alkylene oxide ratios of the copolyether glycols contains in them, but does vary with their method of production. The polymerizates usually contain about 7-15%, by weight, of the ethers, and in some cases may contain as much as 15-18%.

"Oligomeric cyclic ether" means a compound having a calculated molecular weight of less than about 500 and containing ~~one~~ two or more of the following units linked together in a ring:

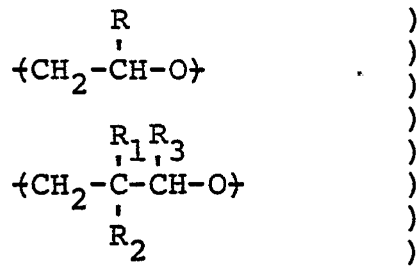

Derived from alkylene oxide (AO)

$-(CH_2-CH_2-CH_2-CH_2-O)-$ Derived from THF.

where R, $R_1$, $R_2$ and $R_3$ are hydrogen, methyl, ethyl or halomethyl.

Illustrative of such oligomeric cyclic ethers are those represented in the following table:

| Composition - Number Ratio of AO Units to THF Units | |
|---|---|
| 2:1 | 1:4 |
| 1:2 | 3:3 |
| 3:1 | 5:2 |
| 2:2 | 2:4 |
| 4:1 | 4:3 |
| 1:3 | 6:2 |
| 3:2 | 3:4 |
| 5:1 | 5:3 |
| 2:3 | 2:5 |
| 4:2 | 4:4 |

If the polymerizate is made using an acidic catalyst, it may be desirable to neutralize any catalyst residue in the polymerizate before proceeding with the process of the invention. This neutralization can be accomplished, for example, by adding about 0.5-1%, by weight, of sodium methoxide to the polymerizate.

According to the invention, the oligomeric cyclic ether content of a THF/alkylene oxide polymerizate is brought to 3%, by weight, or below, by extracting the ethers from the polymerizate with water. This is done by mixing the polymerizate with water

and then vigorously agitating the mixture. The temperature at which the extraction is performed is a matter of convenience. In general, the cyclic ethers are more soluble in cold water than in hot, and it is therefore preferred that the extraction be performed at a temperature of about 15-40°C, even more preferably 15-30°C. If the raw polymerizate is too viscous to handle easily, it may be first dissolved in THF, or preferably, in a nonwater-soluble organic liquid such as xylene or toluene.

The amount of water used varies with the water solubility of the cyclic ethers present, but generally enough water is used to provide a water/polymerizate volume ratio of 5-100/1, preferably about 20-60/1.

The water-polymerizate mixture is held at the selected temperature for about 1-3 hours, preferably about 2 hours. Stirring is then stopped, whereupon the organic phase and water phase separate. The organic phase is then drawn off, and the extraction cycle is repeated, if necessary, until the oligomeric cyclic ether content of the polymerizate is brought to the 3% level. The oligomeric cyclic ether concentration can be reduced even below the 3% level; indeed, it can be reduced to below the threshold of detection by repeating the extraction cycle a sufficient number of times.

In an alternative method, the oligomeric cyclic ether content of a polymerizate can be brought to 3% or below by using the well-known principles of continuous countercurrent extraction, at the temperatures previously recommended for sequential extraction.

In another alternative method, the oligomeric cyclic ether content of a polymerizate can be

brought to 3% or below by the method described by Gerfried Pruckmayr and Ivan Maxwell Robinson in their U.S. application Serial No. 962,311, filed on November 27, 1978 (IC 6327 A), according to which the oligomeric cyclic ether content of a THF/alkylene oxide polymerizate is significantly reduced by bringing it into contact with an ion exchange resin bearing $-SO_3H$ groups. Use of this method not only reduces the oligomeric cyclic ether content of the polymerizate, but also narrows the molecular weight distribution of the copolyether glycol contained in it.

Oligomeric cyclic ether (OCE) content is determined by programmed gas chromatography, using a stainless steel column having a length of 3.049 meters (10 feet) and an outside diameter of 3.175 mm (1/8 inch), packed with 5% by weight of "OV-101", a methyl silicone oil sold by Supelco, Inc., supported on 100-120 U.S.S. mesh "Chromsorb G", sold by Hewlett-Packard, Inc. and which has a glass liner for the injection port, which liner must be replaced frequently to prevent contamination of the port with nonvolatile fractions of sample. The column is in an oven whose temperature is programmed to rise from 70-300°C at the rate of 30°C per minute, with a 12 minute hold time at 300°C before the cycle is repeated. The instrument may be equipped with an integrator to determine the concentration of unknown in the sample. The determination is conducted under the following conditions:

| | |
|---|---|
| Injection port temperature | 280°C |
| Thermal conductivity detector setting | 320°C @150 milliamperes |
| Carrier gas @ gas flow | Helium @30 cubic centimeters per minute |

| | |
|---|---|
| Sample size | 10 microliters |
| Internal Standard | Dimethyl ether of triethylene glycol |

The procedure is standardized by first preparing three standard solutions containing, respectively, 2%, 5% and 10% by weight of purified OCE in tetrahydrofuran. A sample of each standard solution is then prepared by measuring into a sample bottle 1.00 gram of the standard solution, 0.10 gram of the dimethyl ether of triethylene glycol and 10 ml of reagent grade toluene, and then shaking the bottle. Duplicates of each sample are injected in turn into the chromatograph, which is then run under the previously mentioned conditions.

The response factor (RF) of the determination is then calculated for each sample according to the equation

$$RF = \frac{(\%OCE\ in\ standard)(area\ \%\ of\ internal\ standard) \times (weight\ of\ standard\ solution)}{(area\ \%\ of\ OCE)(weight\ of\ internal\ standard)(100)}$$

Average response factor, $RF_a$, is found by averaging the six response factors thus calculated.

The determination of OCE content is carried out by first preparing a sample of THF/alkylene oxide polymerizate of unknown OCE content by measuring into a sample bottle 1.00 gram of solvent-free polymerizate, 0.10 gram of internal standard and 10 ml of reagent grade toluene, and then shaking the bottle. The sample is then injected into the chromatograph which is then run under the previously mentioned conditions. OCE content is calculated from the results according to the equation

$$Weight\ percent\ of\ OCE = \frac{area\ \%\ of\ OCE}{area\ \%\ of\ internal\ standard} \times 10\ RF_a$$

Purified OCE is obtained by first distilling a raw THF/alkylene oxide polymerizate (the alkylene oxide being the same as that in the copolymer of the unknown) in a 5.08 cm (2-inch) Pope wiped film molecular still, sold by Pope Scientific, Inc., Monomonee Falls, Wisconsin. The distillation is carried out at 170-190°C and a pressure of less than about 26 Pa (0.2 mm of mercury), with an input rate of about 1 drop per second.

Two hundred parts by weight of the distillate are mixed with 60 parts by weight of 2,4-toluene diisocyanate and 3 drops of dibutyltin dilaurate and the mixture held at ambient temperature, with stirring, until the exothermic reaction subsides. The mixture is then held at 100°C for two hours, with stirring, and its free isocyanate content determined by titration with di-n-butylamine, as described in Analytical Chemistry of the Polyurethanes, Volume XVI, Part III, D. J. David and R. B. Staley, Wiley-Interscience, 1969, pages 357-359. Enough ethylene glycol to give an isocyanate/hydroxyl mole ratio of about 1/1 is added to the mixture, which is then brought to 100°C and held there, for two hours, with stirring, to complete conversion to a polyurethane.

The resulting mixture containing the inert OCE is then extracted with diethyl ether and the extract concentrated on a rotary evaporater at 100°C and a pressure of about 1333 Pa (10 mm of mercury). The concentrate is then distilled in the Pope molecular still at 170-190°C and a pressure of less than about 26 Pa (0.2 mm of mercury) and an input rate of about 1 drop per second. The distillate is purified OCE.

After the oligomeric cyclic ether content of the raw polymerizate has been reduced to the 3%

level or below, the polymerizate is ordinarily brought to about 0.1%, by weight, water content by drying at 80-160°C at a pressure of 1.33-26.6 kilopascals (10-200 mm of mercury).

If the original oligomeric cyclic ether content of the raw polymerizate is high and the number of water extractions which must be performed to reduce the oligomeric cyclic ether content to 3%, by weight, or below is burdensome, the raw polymerizate can be first distilled to reduce its oligomeric cyclic ether content to about 5%. This distillation is done in conventional equipment, at a temperature of about 95-250°C and a pressure of about 13.3-665 Pa (0.1-5 mm of mercury) for about 1-6 hours. The distillation residue is then extracted with water, as previously described.

## EXAMPLES

In these Examples, all parts are by weight unless indicated otherwise.

### Example 1 (Best Mode)

One part of a THF/ethylene oxide polymerizate containing 14.4% of oligomeric cyclic ethers, was mixed with 50 parts of distilled water in a reaction vessel. The mixture was brought to and held at 26°C, with stirring, for 2 hours. Stirring was then stopped, whereupon the aqueous and organic phases separated. The organic phase was drawn off and dried overnight at 80°C under a pressure of 26.7 kilopascals (200 mm of mercury). The resulting product had an oligomeric cyclic ether content of 2%.

If desired, the oligomeric cyclic ether content of the product could be reduced to below the threshold of detection by repeating the extraction procedure described above 15 times.

Example 2

To a distillation flask were added 133 parts of a THF/ethylene oxide polymerizate containing 18% of oligomeric cyclic ethers. One part of sodium methoxide was added to the polymerizate, which was then gradually heated to 208°C over a 4-hour period. A pressure of about 26.7 Pa (0.2 mm of mercury) was maintained on the flask during this period.

At the end of the 4-hour period, the residue was cooled, analyzed and found to contain 4.5% of oligomeric cyclic ethers.

39.7 Parts of this residue were then dissolved in 50 parts (volume) of THF and the solution was extracted 15 times with 200 part portions of water at 20-25°C, as described in Example 1. The organic phase was then drawn off, dried at 80°C under a pressure of 26.7 kilopascals (200 mm of mercury) for 6 hours and then analyzed. No oligomeric cyclic ethers were detected.

Example 3

A stainless steel kettle equipped with a stirrer was charged with (1) 2000 parts of Amberlyst® 15 resin, sold by Rohm & Haas Co. and pretreated as described in U.S. application Serial No. 962,311 (IC 6327 A), and (2) 49,200 parts (volume) of a THF/EO polymerizate containing 7.5% of oligomeric cyclic ethers, and from which most of the unreacted monomers had been removed by distillation. The mixture was continuously stirred and heated at 100°C for 4 hours at a pressure of 10 kilopascals (75 mm of mercury).

The mixture was then cooled to ambient temperature and the stirring stopped to allow the resin to settle. The vacuum was broken and the liquid product pumped out from the top of the kettle without disturbing the resin. About 43,500 parts (volume) of

THF/EO polymerizate containing 2.4% of oligomeric cyclic ethers was recovered.

INDUSTRIAL APPLICABILITY

The THF/alkylene oxide polymerizates of the invention can be used in the preparation of polyurethanes according to methods well known in the art. Their low oligomeric cyclic ether content gives the resulting polyurethanes beneficial properties, as previously described.

CLAIMS

1. A polymerizate of tetrahydrofuran and an alkylene oxide whose ring contains up to 3 carbon atoms, the polymerizate containing no more than about 3%, by weight, of oligomeric cyclic ethers.

2. The polymerizate of claim 1 containing no more than about 2%, by weight, of oligomeric cyclic ethers.

3. The polymerizate of claim 1 containing no detectable oligomeric cyclic ethers.

4. The polymerizate of claim 1 which is of tetrahydrofuran and ethylene oxide.

5. The polymerizate of claim 1 which is of tetrahydrofuran and a propylene oxide.

6. A method for producing the polymerizate of claim 1, the method comprising extracting oligomeric cyclic ethers from a raw polymerizate with water, until the polymerizate contains no more than about 3%, by weight, of oligomeric cyclic ethers.

7. The method of claim 6, in which, before the water extraction is performed, the raw polymerizate is distilled until its oligomeric cyclic ether content is about 5%, by weight.

European Patent Office

# EUROPEAN SEARCH REPORT

0004273

Application number

EP 79 10 0235

| DOCUMENTS CONSIDERED TO BE RELEVANT | | | CLASSIFICATION OF THE APPLICATION (Int. Cl.²) |
|---|---|---|---|
| Category | Citation of document with indication, where appropriate, of relevant passages | Relevant to claim | |
| | No relevant documents have been disclosed. ---- | | C 08 G 65/30 |
| | | | TECHNICAL FIELDS SEARCHED (Int.Cl.²) |
| | | | C 08 G 65/30<br>65/20<br>65/16 |
| | | | CATEGORY OF CITED DOCUMENTS<br>X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| X | The present search report has been drawn up for all claims | | &: member of the same patent family, corresponding document |

| Place of search | Date of completion of the search | Examiner |
|---|---|---|
| The Hague | 02-04-1979 | DECOCKER |

EPO Form 1503.1 06.78